# EUROPEAN PATENT APPLICATION

(11) **EP 0 735 735 A2**
(43) Date of publication of application: **02.10.1996**
(21) Application number: 96301904.7
(22) Date of filing: 20.03.1996
(51) Int. Cl.: H04M 3/50

(54) **Video and audio directory assistance**

(30) Priority: 31.03.1995 US 414848
(71) Applicant: AT&T IPM Corp., Coral Gables, Florida 33134 (US)
(72) Inventor: Corrigan, Dennis Charles, Branchburg, New Jersey 08876 (US); Eisdorfer, Jerry, Somerset, New Jersey 08873 (US); Eisdorfer, Allen, Woodbridge, New Jersey 07095 (US); Paulus, Conrad Joseph, Bridgewater, New Jersey 08807 (US)
(74) Representative: Buckley, Christopher Simon Thirsk

(57) **Abstract**

A directory assistance system (116) which provides video directory assistance information together with (or in place of) audio directory assistance information is disclosed. Directory assistance calls from a calling party (110) desiring to learn a sought-after telephone number (e.g. 120) are routed to a directory assistance system (116). On the basis of data for identifying a sought-after telephone number, the directory assistance system determines whether there is video information (in 144) associated with the sought-after telephone number. When video information is available, the information is provided (via 114,118) to the calling party together with or in lieu of an audio directory assistance message. Providing video directory assistance information in this matter greatly increases the amount of information that can be provided to a calling party, while still allowing directory assistance to be automated.

## Description

### Technical Field

This invention relates to automated directory assistance, as provided by telephone companies to their subscribers.

### Background of the Invention

Telephone companies provide many types of information to their customers as part of directory assistance service. For example, a calling customer may obtain a name, telephone number, address, and zip code from directory assistance. However, because the information must be stored and organized in a database, the type of information available is limited by the database structure. This makes it difficult for companies offering directory assistance to store customized or "miscellaneous" data for each subscriber in the database. For example, it would be difficult, if not impossible, to store information such as a price list of goods or services available from a subscriber in the database.

Moreover, conventional directory assistance systems typically provide automated responses to directory assistance requests. That is, once a "live" operator has ensured that the correct directory assistance entry has been located, the actual directory information often is delivered to the calling party by an automated operator position in the form of a computer-generated message. This limits the amount of information that can be delivered to a calling customer by the directory assistance system while still maintaining the efficiencies provided by automated operator positions.

### Summary of the Invention

Increased information capacity and flexibility in providing directory assistance services is achieved in accordance with the invention by providing video directory assistance information together with (or in place of) audio directory assistance information. Directory assistance calls from a calling party desiring to learn a sought-after telephone number are routed to a directory assistance system. Using data for identifying a sought-after directory listing (e.g., a telephone number), the directory assistance system determines whether there is video information associated with the sought-after directory listing. When video information is available, the information is provided to the calling party together with or in lieu of an audio directory assistance message. Providing video directory assistance information in this manner greatly increases the amount of information that can be provided to a calling party, while still allowing directory assistance to be automated. Video directory assistance also provides increased flexibility in the type of information that can be provided.

In an exemplary embodiment of the invention, non-video directory assistance information is stored in a conventional directory assistance database, together with an indication of whether there is video information associated with a particular directory listing (e.g., telephone service subscriber or telephone number) in the database. Video information, which could be one or more still images or a motion picture, is stored in a separate video database. The conventional database provides a pointer to the location in the video database at which is stored the video information necessary to respond to a particular directory assistance request.

### Brief Description of the Drawings

In the drawings:
Fig. 1 is a simplified block diagram of a telecommunications system for providing video directory assistance in accordance with the principles of the invention;
Fig. 2 is a table useful for determining whether a calling party has video capability;
Fig. 3 is a table of information stored within a directory assistance database within the system of Fig. 1; and
Fig. 4 is a flow chart depicting the steps illustratively carried out by a directory assistance computer within the system of Fig. 1 in implementing the invention.

### Detailed Description

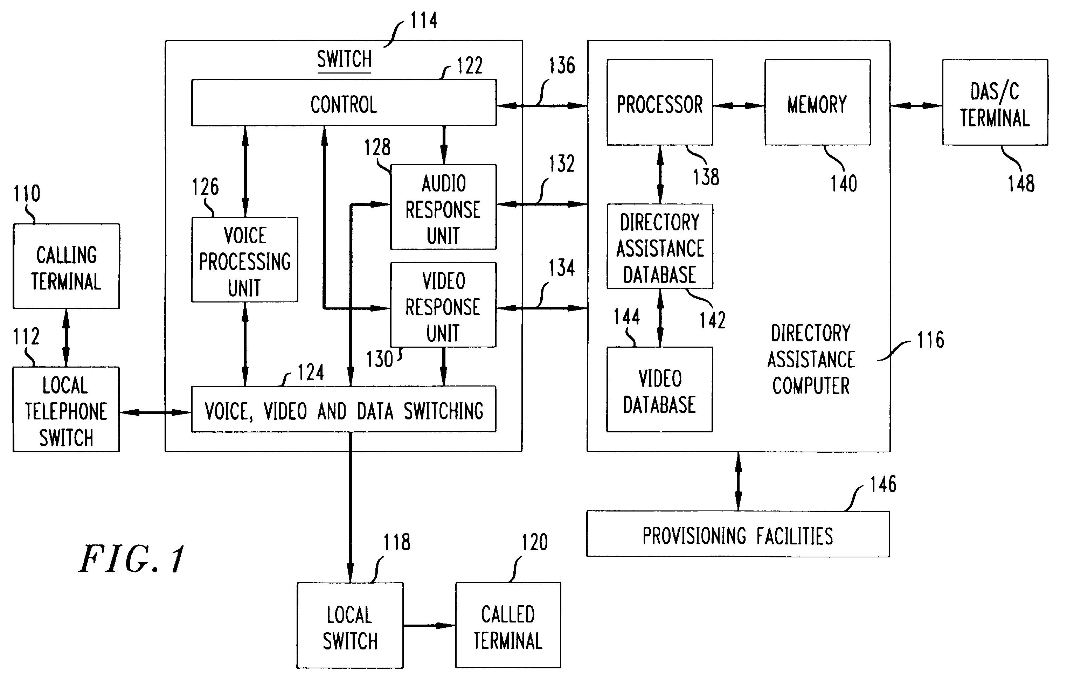

The exemplary communications system of Fig. 1 is equipped to provide audio and video directory assistance in accordance with the principles of the invention. The system includes a calling terminal 110 connected to a local telephone switch 112, a telecommunications switch 114 operating under stored program control, a directory assistance computer 116, a local switch 118, and a called terminal 120. A caller at calling terminal 110 uses the services of the directory assistance computer to obtain a directory listing, such as the telephone number (hereafter referred to as the "sought-after number") of called terminal 120. Calling terminal 110 and called terminal 120 may be either conventional telephones or telephones equipped to provide video telephony service (including, for example, a computer terminal capable of providing video telephone service and cable TV telephones). Local switches 112 and 118 illustratively are central office switches capable of switching video information. Switch 114 is a switch such as the 5ESS switch manufactured by AT&T Corp., arranged to offer the Operator Services Position System (OSPS) features.

Within switch 114 are various blocks for carrying out the functions of a telecommunications switch. Switch 114 includes a control block 122, a switching block 124 for switching voice, data and video signals, a voice processing unit (VPU) block 126, an audio response unit block 128, and a video response unit block 130. Control 122 is a distributed control system operating under the control of a group of data and call processing programs to control various blocks of the switch. Control block 122 communicates with directory assistance computer 116 via a data link 136. VPU 126 is connected to control 122 to receive voice commands from a subscriber at calling terminal 110. VPU 126 also generates tones and voice messages to prompt a customer to speak or key information (e.g., in the form of dual tone multifrequency (DTMF) digits) into the system for subsequent recognition by the VPU. VPU 126 includes both announcement circuits and detection circuits. VPU 126 could be implemented, for example, using the Conversant® voice response system commercially available from AT&T Corp.

Directory assistance computer 116 includes several components, including a processor 138, a memory 140 associated with the processor, a directory assistance database 142, and a video database 144. The directory assistance database of directory assistance computer 116 is provisioned in a conventional manner by provisioning facilities 146. Provisioning facilities 146 also update and provision video database 144. The video information may include a still image, multiple still images, or a motion picture. A directory assistance computer terminal 148 communicates with directory assistance computer 116 to provide a directory assistance operator with access to the computer.

Audio response unit 128 is coupled via a link 132 to directory assistance computer 116. Audio response unit 128, under the control of control block 122, plays audio responses from directory assistance computer 116 to calling terminal 110. The audio information typically is output from directory assistance database 142. Audio response unit 128 provides these responses to calling terminal 110 via switching block 124. Video response unit 130 receives video signals from directory assistance computer 116 via a video link 134. Video response unit 130 formats the received video signals and outputs the video signals to switching block 124 for delivery to calling terminal 110. The operation of audio response unit 128 and video response unit 130 are controlled and synchronized with the operation of directory assistance computer 116 by control block 122.

When a directory assistance request is received from calling terminal 110, the call is routed by switch 112 to switch 114. Switch 114 communicates with directory assistance computer 116 via line 136 to process the directory assistance request. The operator at terminal 148 communicates orally with a customer at calling terminal 110 and, on the basis of these communications, keys information into terminal 148 for transmission to computer 116. The computer responds to the keyed information by generating displays of information, which may include the desired directory number, on directory assistance computer terminal 148. Until the customer gives enough information to locate a valid listing from directory assistance database 142, the customer may not be connected to audio response unit 128, as there is nothing to announce. However, when the operator ascertains that the desired number or listing has been obtained, the operator signals to computer 116 to identify the correct listing and a directory number is then announced to the customer by audio response unit 128.

In a departure from the prior art, video information is provided (when available) to calling terminal 110 together with the audio directory assistance information. At a high level, the process involves (1) determining whether calling terminal 110 has video capability, (2) determining whether there is video information associated with the sought-after directory listing (e.g., the sought-after telephone number), and (3) delivering the video information (and typically delivering audio information) to calling terminal 110. Of course, one skilled in the art will appreciate that the process may include additional steps (or fewer steps), such as receiving the automatic number identifiers (ANI) of calling terminal 110 and providing video information which varies depending on the received ANI, or receiving DTMF signals from calling terminal 110 indicating a selection of video information by the caller and delivering the caller-selected information.

The video information "associated" with the sought-after telephone number may be video information which is specific to the sought-after number (i.e., specific to the called party at called terminal 120) or may be some "default" information which is not specific to the sought-after number. Assume for the moment that the party at called terminal 120 is a sports equipment retail store. Video information which is specific to the sought-after number of called terminal 120 might include, for example, a price list of various types of sports equipment available from the store. An example of "default" video information would be an advertisement or logo provided by the telephone company (e.g., in exchange for reducing the telecommunications cost to called terminal 120), which bears no particular relation to the sports equipment retail store.

Processor 138 determines whether calling terminal 110 is equipped to receive video information. In an illustrative embodiment, processor 138 accesses memory 140 to determine whether terminal 110 has such capability. Fig. 2 shows an exemplary table 200, that may be stored within memory 140, which indicates which telephone stations have video capability. Table 200 illustratively includes two columns, 202 and 204. Column 202 stores a list of ANIs of various calling terminals (such as calling terminal 110) which have access to directory assistance computer 116. Column 204 stores an indication, for each respective ANI in column 202, of whether the ANI has video capability. Processor 138 uses the ANI of calling terminal 110 (which ANI is received from switches 112 and 114) as an input to memory 140, and receives as an output from the memory an indication of whether calling terminal 110 can receive video signals. Of course, other forms of tables could be used to make this determination. Similarly, the determination could be made directly based upon an indication of video capability or information provided directly by calling terminal 110 or switches 112 or 114.

If memory 140 returns information indicating to processor 138 that calling terminal 110 does not have video capability, the directory assistance call or request is processed in a conventional manner. Calling terminal 110 receives only audio directory assistance information. However, if memory 140 returns information indicating to processor 138 that calling terminal 110 can receive video signals, processor 138 determines whether there is video information stored within video database 144 that is associated with the directory assistance telephone number sought after by the caller at calling terminal 110.

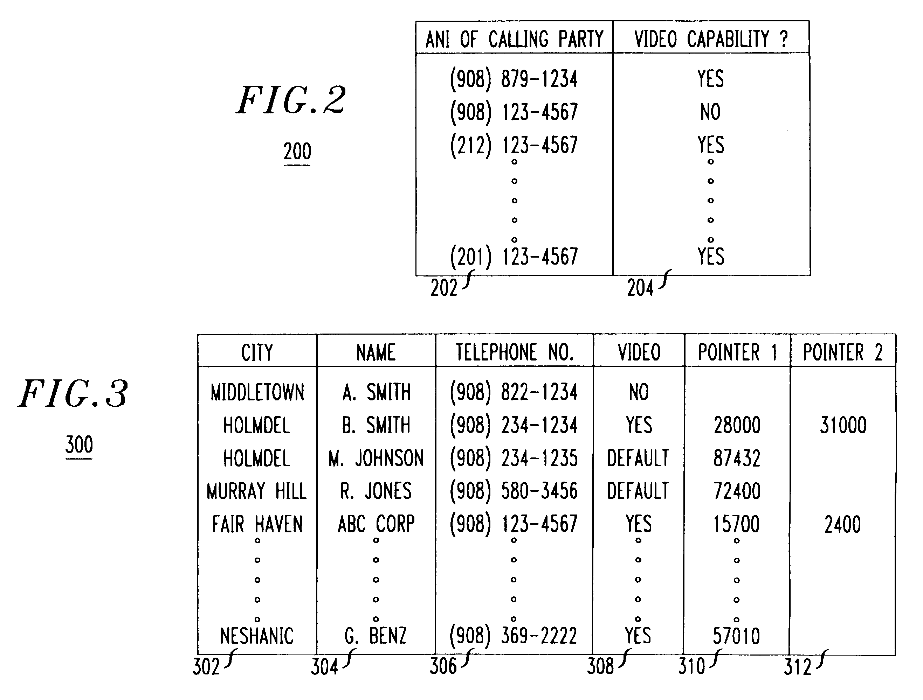

Fig. 3 shows an exemplary table 300 illustrating the database structure stored within directory assistance database 142. Table 300 includes multiple rows and columns. Each row represents a record or information held for a particular directory assistance telephone number. Columns 302, 304, and 306 of table 300 respectively store the city of residence, name, and telephone number of each person in the directory assistance database. Column 308 stores an indication of whether there is video information stored within video database 144 that is associated with the telephone number (of the same row) in column 306. Optionally, column 308 may specify that there is no specific video information stored, but that selected default video information is to be provided for the specified telephone number of column 306. Column 310 stores a pointer to the location in video database 144 which stores the video information for the telephone number in column 306. Column 310 may be empty if column 308 indicates that there is no video information for the directory number in column 306. An additional column, column 312, may be included to provide a second pointer to an alternative memory location in video database 144. This second pointer is useful, for example, to provide a second video image, a set of still video images, or a different motion picture to be sent to calling terminal 110 after a predetermined period of time has elapsed. The second pointer (or additional pointers which are not shown) also may be used to identify video information to be delivered to a caller at calling terminal 110 in response to a DTMF signal entered by the caller. In this instance, processor 138, under program control, selects the appropriate pointer on the basis of the DTMF digit detected by VPU 126. Still another use for column 312 is to provide the capability of delivering information on the basis of a portion of the ANI of calling terminal 110. For example, column 310 stores a pointer to video information to be provided for all area codes other than 908, 201, 914 and 212. Column 312 stores a pointer to video information to be delivered when area code of calling terminal 110 is one of 908, 201, 914 and 212.

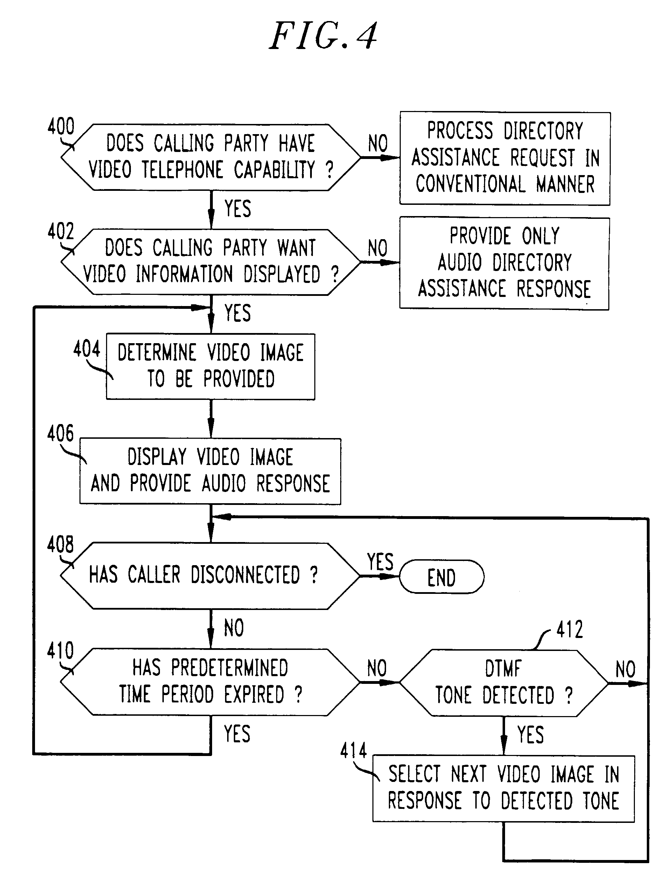

Fig. 4 shows a flow chart which summarizes the steps of an illustrative call flow. Processing starts at step 400. Processor 138 determines whether the calling party has video telephone (e.g., video reception) capability. If calling terminal 110 does not have such capability, the directory assistance request is processed in a conventional manner to provide an audio response. Otherwise, processing continues at step 402. At step 402 the processor determines whether the called party wants video information to be displayed. That is, processor 138 determines whether column 308 of table 300 includes a "yes" or "no" (or "default") indication. If the determination is that video information is not to be returned to calling terminal 110 with the sought-after number, only the audio response is provided. If video information is to be displayed, processor 138 determines which information is to be provided (step 404). This step may be accomplished by checking column 310 of table 300 to retrieve the pointer to a memory location in video database 144. The appropriate video information is then output (step 406) from video database 144 to video response unit 130 of switch 114. Video response unit 130 formats the video information as required or appropriate for display on calling terminal 110. The appropriate audio response is provided from directory assistance database 142 via audio response unit 128.

Processor 138 preferably is programmed to poll switch 114 to determine whether calling terminal 110 has disconnected from the call (step 408). If the caller has disconnected, the directory assistance request has been satisfied and further processing is terminated. If calling terminal 110 has not disconnected, processor 138 determines whether a predetermined time period has elapsed (step 410). If the predetermined time period has elapsed, processing continues at step 404, and processor 138 determines what video image is to be provided to calling terminal 110. This sequence of operations permits different video information to be displayed while the call is in progress.

Returning again to step 410, processor 138 polls the call connection for a DTMF tone entry by the caller at calling terminal 110 (step 412) while waiting for the predetermined time period to elapse. If no DTMF tone is received from calling terminal 110, processor 138 returns to step 408 to determine whether the caller at calling terminal 110 is still connected. However, if a DTMF tone is received from calling terminal 110, processor 138 selects different video information to display on calling terminal 110 in response to the entered tone (step 414).

One skilled in the art will appreciate that various modifications can be made without departing from the scope of the invention. For example, although the invention has been described in the context of a system having a separate video database, the video information could be stored with the other directory assistance information in a single database.

## Claims

1. A method for use in an automated directory assistance system in which calls are routed to the directory assistance system, via a communications system, from a calling party desiring to learn a sought-after directory listing, the method comprising the steps of:
receiving in the directory assistance system a request for directory assistance, the request including data for identifying the sought-after directory listing; and
delivering to the calling party an audio message which gives the sought-after directory listing,
said delivering step including the step of selectively delivering video information with the audio message delivered to the calling party.

2. The method of claim 1 further comprising the step of:
receiving in the directory assistance system the telephone number of the calling party from the communications system; and
determining, on the basis of the received telephone number, whether the calling party has video capability.

3. The method of claim 2 wherein the step of selectively delivering video information comprises:
accessing a directory assistance database to determine whether there is video information associated with the sought-after directory listing; and
delivering video information associated with the sought-after directory listing to the calling party when the calling party has video capability.

4. A method for use in an automated directory assistance system in which calls are routed to the directory assistance system, via a communications system, from a calling party desiring to learn a sought-after telephone number, the method comprising the steps of:
receiving in the directory assistance system a request for directory assistance, the request including data for identifying the sought-after telephone number;
receiving the telephone number of the calling party from the communications system;
determining, on the basis of the received telephone number, whether the calling party has video capability;
delivering to the calling party a computer-generated audio message which gives the sought-after telephone number, and
responsive to a determination that the calling party has video capability, selectively delivering video information with the audio message delivered to the calling party.

5. The method of claim 4 wherein at least a predetermined portion of the video information delivered to the calling party is selected in response to the received telephone number of the calling party.

6. The method of claim 1 or 4 wherein the step of selectively delivering video information comprises accessing a directory assistance database to determine whether there is video information associated with the sought-after number.

7. The method of claim 1 or 4 wherein the video information comprises at least one still image.

8. The method of claim 1 or 4 wherein the video information comprises a motion picture.

9. The method of claim 1 or 4 wherein the video information is specific to the sought-after directory listing.

10. The method of claim 1 or 4 wherein at least a portion of the video information is delivered in response to a signal received from the calling party.

11. Apparatus for use in an automated directory assistance system in which calls are routed to the directory assistance system, via a communications system, from a calling party desiring to learn a sought-after telephone number, comprising:
means for receiving in the directory assistance system a request for directory assistance, the request including data for identifying the sought-after telephone number;
means for delivering to the calling party an audio message which gives the sought-after telephone number; and
means for selectively delivering video information with the audio message delivered to the calling party.

12. The apparatus of claim 11 wherein the means for selectively delivering video information comprising means for storing video information.

13. The apparatus of claim 11 further comprising:
means for receiving in the directory assistance system the telephone number of the calling party from the communications system; and
means for determining, on the basis of the received telephone number, whether the calling party has video capability.

14. The apparatus of claim 13 wherein the means for selectively delivering video information comprises:
means for accessing a directory assistance database to determine whether there is video information associated with the sought-after number; and
means for delivering video information associated with the sought-after number to the calling party when the calling party has video capability.

15. An apparatus for use in an automated directory assistance system in which calls are routed to the directory assistance system, via a communications system, from a calling party desiring to learn a sought-after telephone number, the apparatus comprising:
a switch configured to receive a telephone number of the calling party and to receive a request for directory assistance, the request for directory assistance including data for identifying the sought-after telephone number;
means for determining, on the basis of the received telephone number, whether the calling party has video capability;
means for delivering to the calling party a computer-generated audio message which gives the sought-after telephone number; and
means, responsive to a determination that the calling party has video capability, for selectively delivering video information with the audio message delivered to the calling party.

16. The apparatus of claim 15 wherein the means for selectively delivering video information delivers to the calling party video information, at least a portion of which is selected in response to the received telephone number of the calling party.

17. The apparatus of claim 11 or 15 wherein the means for selectively delivering video information comprises a directory assistance database which includes an indication of whether there is video information associated with the sought-after number.

18. The apparatus of claim 11 or 15 wherein the video information comprises at least one still image.

19. The apparatus of claim 11 or 15 wherein the video information comprises a motion picture.

20. A method for use in an automated directory assistance system in which calls are routed to the directory assistance system, via a communications system, from a calling party desiring to learn directory assistance information about an entity identified by the calling party, the method comprising the steps of:
receiving in the directory assistance system a request for directory assistance information, the request including data for identifying the entity; and
delivering to the calling party a message which gives the directory assistance information, the message selectively including video information.

21. The method of claim 20 wherein the video information is specific to the entity.

22. The method of claim 20 wherein the directory assistance information comprises the name of the entity.

23. The method of claim 20 wherein the directory assistance information comprises a sought-after telephone number of the entity.

24. The method of claim 20 wherein at least a portion of the video information is delivered in response to a signal received from the calling party.

25. The method of claim 20 wherein the video information is specific to the directory assistance information.
